# EUROPÄISCHE PATENTSCHRIFT

(11) **EP 3 643 436 B1**
(45) Veröffentlichungstag und Bekanntmachung des Hinweises auf die Patenterteilung: **17.08.2022**
(21) Anmeldenummer: 19203570.7
(22) Anmeldetag: 16.10.2019
(51) Int. Cl.: B23B 31/16

(54) **SPANNFUTTER FÜR WERKZEUGMASCHINEN**
CHUCK FOR MACHINE TOOLS
MANDRINS POUR MACHINES-OUTILS

(30) Priorität: 19.10.2018 DE 102018126070
(43) Veröffentlichungstag der Anmeldung: 29.04.2020
(73) Patentinhaber: Schunk GmbH & Co. KG Spann- und Greiftechnik, 74348 Lauffen am Neckar (DE)
(72) Erfinder: Siber, Mathias, 72517 Sigmaringendorf (DE)
(74) Vertreter: Paul & Albrecht Patentanwälte PartG mbB

(56) Entgegenhaltungen:
- DE-A1- 2 930 721
- DE-A1- 3 916 324
- US-A- 976 452
- US-A- 4 969 654
- US-A1- 2008 018 060

## Beschreibung

Die vorliegende Erfindung betrifft ein Spannfutter für Werkzeugmaschinen, insbesondere für Drehmaschinen, mit einem eine Futterachse definierenden Futterkörper, der in seiner vorderen Stirnfläche mehrere sich radial zu der Futterachse erstreckende Führungsnuten zur Aufnahme von Spannbacken aufweist, wobei jeder Führungsnut eine Treibbackeneinheit zugeordnet ist, die einen Grundkörper aufweist, welcher in einer hinter der Führungsnut im Futterkörper ausgebildeten Führungstasche parallel zu der Führungsnut zwischen einer inneren und einer äußeren Endposition bewegbar ist, und eine am Grundkörper gehaltene und relativ zu diesem in axialer Richtung bewegbare Treibbacke umfasst, die über eine vorderseitige Verzahnung mit einer korrespondierenden Gegenverzahnung einer Spannbacke in Eingriff bringbar ist, einem im Futterkörper axial bewegbaren Futterkolben, der zwischen einer vorderen Endposition und einer hinteren Endposition im Futterkörper bewegbar ist und über einen Koppelmechanismus mit den Grundkörpern der Treibbackeneinheiten gekoppelt ist, um eine axiale Bewegung des Futterkolbens in radiale Bewegungen der Treibbackeneinheiten umzusetzen, wobei mindestens ein Ausklinkmechanismus mit einem Ausklinkelement vorgesehen ist, welches in dem Futterkörper relativ zu diesem bewegbar angeordnet ist und mit mindestens einer Treibbacke gekoppelt ist, um durch Bewegen des Ausklinkelements die Treibbacke zwischen einer hinteren Backenwechselstellung, in welcher die Verzahnung der Treibbacke soweit aus der Führungsnut abgesenkt ist, dass ein Backenwechsel möglich ist, und einer vorderen Arbeitsstellung, in welcher ein Backenwechsel nicht möglich ist, zu verstellen.

Spannfutter für Werkzeugmaschinen dieser Art sind beispielsweise aus der DE 40 16 775 C1 bekannt und werden in der Praxis in erster Linie an Drehmaschinen eingesetzt, um die zu bearbeitenden Werkstücke zu spannen. Das vorbekannte als Kraftspannfutter ausgebildete Spannfutter umfasst einen Futterkörper, in dessen vorderer Stirnfläche sich drei Führungsnuten zur Aufnahme von Spannbacken radial von einer zentralen Futterachse nach außen erstrecken. Jeder Führungsnut ist eine Treibbackeneinheit zugeordnet, die einen Grundkörper und eine an diesem gehaltene und relativ zu diesem in axialer Richtung bewegbare Treibbacke umfasst. Der Grundkörper ist in einer unterhalb der Führungsnut im Futterkörper ausgebildeten Führungstasche parallel zu der Führungsnut zwischen einer inneren und einer äußeren Anschlagposition bewegbar, um die Spannbacken radial zur Futterachse zu bewegen, wenn die Treibbacke mit ihrer vorderseitigen Verzahnung mit einer korrespondierenden Gegenverzahnung einer Spannbacke in Eingriff steht.

Zum Bewegen der Spannbacken sind die Grundkörper der Treibbackeneinheiten über einen Keilhakenmechanismus mit einem im Futterkörper axial motorisch oder hydraulisch bewegbaren Futterkolben gekoppelt, sodass eine axiale Bewegung des Futterkolbens in radiale Bewegungen der Treibbackeneinheiten umgesetzt werden.

Ferner umfasst jede Treibbackeneinheit einen Ausklinkmechanismus mit einem Ausklinkelement, welches im Futterkörper um eine radial liegende Drehachse drehbar gelagert ist. Zum Entnehmen der Spannbacke ist es erforderlich, die Treibbacke in axialer Richtung abzusenken, sodass die Verzahnung der Treibbacke aus der Gegenverzahnung der Spannbacke außer Eingriff kommt. Dazu umfasst das Ausklinkelement einen exzentrisch zu seiner Drehachse angeordneten Abschnitt, der sich in eine Radialbohrung der Treibbacke erstreckt, um beim Verdrehen des Ausklinkelements die Treibbacke in axialer Richtung zu bewegen.

Das vorbekannte Spannfutter umfasst ferner eine Arretierungseinrichtung, die bewirkt, dass ein in das Ausklinkelement eingebrachter Ausklinkschlüssel in diesem arretiert wird, wenn sich die Treibbacke außer Eingriff mit einer in die Führungsnut eingesetzten Spannbacke befindet.

Wenngleich sich derartige Spannfutter in der Praxis grundsätzlich bewährt haben, so wird durch die Arretierungseinrichtung für den Ausklinkschlüssel das Risiko von Fehlbedienungen zwar deutlich minimiert, aber nicht gänzlich ausgeschlossen, da Unachtsamkeiten des Bedieners nach wie vor zu Fehlern bei der Einspannung von Werkstücken führen können.

Aus der US 4,969,654 A ist ein Spannfutter mit den Merkmalen des Oberbegriffs des unabhängigen Anspruchs 1 vorbekannt. Das Spannfutter der US 4,969,654 A besitzt einen eine Futterachse definierenden Futterkörper, in dessen vorderer Stirnfläche mehrere sich radial zur Futterachse erstreckende Führungsnuten zur Aufnahme von Spannbacken ausgebildet sind. Jeder Führungsnut ist eine Treibbackeneinheit zugeordnet, die einen Grundkörper aufweist. Dieser ist in einer hinter der Führungsnut im Futterkörper ausgebildeten Führungstasche parallel zu der Führungsnut zwischen einer inneren und äußeren Endposition bewegbar. An dem Grundkörper ist eine Treibbacke gehalten, die relativ zu dem Grundkörper in axialer Richtung bewegbar und über eine vorderseitige Verzahnung mit einer korrespondierenden Gegenverzahnung einer Spannbacke in Eingriff bringbar ist. Ferner besitzt das Spannfutter einen im Futterkörper axial bewegbaren Futterkolben, der zwischen einer vorderen Endposition und einer hinteren Endposition im Futterkörper bewegbar ist. Dieser ist über einen Koppelmechanismus mit den Grundkörpern der Treibbackeneinheiten gekoppelt, um eine axiale Bewegung des Futterkolbens in radiale Bewegungen der Treibbackeneinheiten umzusetzen.

Das Spannfutter besitzt jeder Führungsnut zugeordnet einen Ausklinkmechanismus mit einem Ausklinkelement. Dieses ist in der Treibbackeneinheit bewegbar angeordnet und mit einer Treibbacke gekoppelt. Durch Bewegen des Ausklinkelements, welches einen exzentrischen mittleren Abschnitt aufweist, wird die Treibbacke zwischen einer hinteren Backenwechselstellung und einer vorderen Arbeitsstellung verstellt.

Weitere Spannfutter sind aus der US 2008/018060 A1, der DE 39 16 324 A1, der DE 29 30 721 A1 und der US 976,452 A1 vorbekannt.

Aufgabe der vorliegenden Erfindung ist somit, ein alternatives Spannfutter bereit zu stellen, welches die bei den bekannten Spannfuttern bestehenden Risiken hinsichtlich einer Fehlbedienung weiter minimiert, um die Betriebssicherheit zu erhöhen und Ausfallzeiten zu reduzieren.

Diese Aufgabe ist durch ein Spannfutter mit den Merkmalen des unabhängigen Anspruchs 1 gelöst. Bei einem solchen Spannfutter ist jedes Ausklinkelement in dem Futterkörper um jeweils eine quer zur Futterachse, insbesondere radial liegende Drehachse drehbar gelagert und mit der dazugehörigen Treibbacke derart gekoppelt, dass eine erste Drehlage des Ausklinkelements der Arbeitsstellung der zugehörigen Treibbacke und eine zweite Drehlage des Ausklinkelements der Backenwechsenstellung der zugehörigen Treibbacke entspricht.

Das erfindungsgemäße Spannfutter ist mit einem Sicherungsmechanismus versehen, der eine Bewegung der Treibbacken von ihrer Arbeitsstellung in ihre Backenwechselstellung nur dann ermöglicht, wenn sich der Futterkolben in einer definierten Sicherungsposition, die beispielsweise seiner vorderen Endposition entspricht, befindet. Gleichzeitig soll der Sicherungsmechanismus gewährleisten, dass der Futterkolben mechanisch in dieser Sicherungsposition arretiert wird, wenn sich eine Treibbacke außerhalb ihrer Arbeitsstellung befindet, sodass eine Bewegung des Futterkolbens und das Aufbringen einer Spannkraft nur möglich ist, wenn sich alle Treibbacken in ihrer Arbeitsstellung befinden.

Eine derartige Sicherung des Kolbens führt dazu, dass bei einer Fehlbedienung, das heißt bei dem Versuch, den derart gesicherten Futterkolben zu bewegen, der Sicherungsmechanismus lediglich der Betätigungskraft des Futterkolbens und nicht der üblicherweise betragsmäßig höheren Spannkraft der Treibbackeneinheiten entgegenwirken muss, wie dies bei einer unmittelbar an den Treibbackeneinheiten eingreifenden Sicherung der Fall wäre.

Bei dem erfindungsgemäßen Spannfutter ist vorgesehen, durch eine rotatorische Bewegung des Ausklinkelements die dazugehörige Treibbacke zwischen ihrer Backenwechselstellung und ihrer Arbeitsstellung einzeln zu verstellen.

In weiterer Ausgestaltung der Erfindung sind die Ausklinkelemente jeweils entlang ihrer Drehachse in dem Futterkörper translatorisch bewegbar geführt und mit dem Futterkörper über Steuermittel derart gekoppelt, dass sie jeweils entlang ihrer Drehachse axial verstellt werden, wenn sie um die Drehachse verdreht werden, wobei die Ausklinkelemente jeweils in ihrer ersten Drehlage eine radial äußere Position einnehmen, in der sie außer Eingriff von dem Futterkolben stehen, und in ihrer zweiten Drehlage eine radial innere Position einnehmen, in der sie mit dem Futterkolben in Eingriff kommen, um diesen in der Sicherungsposition zu arretieren. Mit anderen Worten geht mit der Drehung eines Ausklinkelements von seiner ersten Drehlage, welche der Arbeitsstellung der Treibbacke entspricht, in seine zweite Drehlage, welche der Backenwechselstellung der Treibbacke entspricht, gleichzeitig eine translatorische Bewegung nach innen einher, welche dazu führt, dass die Ausklinkelemente in ihrer zweiten Drehlage mit dem Futterkolben in Eingriff kommen und diesen arretieren. Sobald also eine Treibbacke in ihre Backenwechselstellung abgesenkt ist, kann der Futterkolben nicht mehr bewegt werden. Gleichzeitig kann beispielsweise durch entsprechende Aussparungen am Futterkolben, in welche das Ausklinkelement in seiner radial inneren Position eingreift, sichergestellt werden, dass eine Verdrehung des Ausklinkelements von seiner ersten Drehlage in seine zweite Drehlage und somit ein Absenken der jeweiligen Treibbacke nur dann möglich ist, wenn sich der Futterkolben in seiner Sicherungsposition befindet.

Zur Realisierung dieser Bewegung weisen die Steuermittel gemäß einer Weiterbildung dieser Ausführungsform für jedes Ausklinkelement eine in der Außenfläche des Ausklinkelements ausgebildete Steuernut und einen am Futterkörper angeordneten Steuerbolzen, welcher in die Steuernut eingreift, auf, wobei die Steuernut einen wendelartigen Nutabschnitt umfasst, welcher sich in der Weise entlang eines Umfangsabschnitts des Ausklinkelements erstreckt, dass das Ausklinkelement bei einer Drehung um die Drehachse translatorisch entlang seiner Drehachse bewegt wird, um in Eingriff mit dem Futterkolben zu kommen oder diesen freizugeben, wobei sich insbesondere an das eine und/oder andere Ende des wendelartigen Nutabschnitts ein sich in Umfangsrichtung erstreckender Nutabschnitt anschließt. Die mit einer Drehbewegung einhergehende translatorische Bewegung des Ausklinkelements wird somit durch eine wendelartig angeordnete Steuernut ermöglicht, welche mit dem in die Steuernut eingreifenden Steuerbolzen eine Zwangsführung des Ausklinkelements bildet. Dadurch ist sichergestellt, dass bei einer Drehbewegung des Ausklinkelements zwangsweise gleichzeitig eine translatorische Bewegung stattfindet.

Jedes Ausklinkelement kann einen Exzenternocken aufweisen, der an einer hinteren Stirnfläche der zugehörigen Treibbacke anliegt und derart ausgestaltet ist, dass er diese in der ersten Drehlage des Ausklinkelements in der Arbeitsstellung positioniert. Durch den Exzenternocken wird die Drehbewegung des Ausklinkelements in eine axiale Bewegung der Treibbacke umgesetzt, sodass durch die Drehung des Ausklinkelements die Treibbacke zwischen ihrer Arbeitsstellung und ihrer Backenwechselstellung bewegt werden kann.

In weiterer Ausgestaltung kann der Exzenternocken an seiner Außenkontur eine insbesondere ebene Anlagefläche aufweisen, welche derart ausgestaltet ist, dass sie in der ersten Drehlage des Ausklinkelements flächig an der hinteren Stirnfläche der zugehörigen Treibbacke anliegt. In gleicher Weise kann der Exzenternocken ferner eine insbesondere ebene Kontaktfläche aufweisen, welche derart ausgestaltet ist, dass sie in der zweiten Drehlage des Ausklinkelements flächig an der hinteren Stirnfläche der zugehörigen Treibbacke anliegt. Durch eine derartige Anlagefläche, bzw. Kontaktfläche wird ein labiler Zustand des Ausklinkelements vermieden, der entstehen kann, wenn auf die Treibbacke eine nach hinten gerichtete Axialkraft wirkt. Eine derartige Axialkraft kann beispielsweise durch ein elastisches Spannmittel, insbesondere eine Druckfeder auf die Treibbacke ausgeübt werden, wobei sich die Druckfeder gegen den Grundkörper der Treibbackeneinheit abstützt. Eine an der hinteren Stirnseite der Treibbacke in Anlage befindliche ebene Fläche das Ausklinkelement arretiert somit das Ausklinkelement in der korrespondierenden Drehlage und sorgt für einen stabilen Gleichgewichtszustand.

Bevorzugt weist jedes Ausklinkelement eine Eingriffsöffnung für einen Ausklinkschlüssel auf. Die Verwendung eines Ausklinkschlüssels mit einer definierten Eingriffskontur zum Verdrehen des Ausklinkelements hat den Vorteil, dass eine versehentliche manuelle Betätigung, beispielsweise durch eine unbeabsichtigte Berührung, zuverlässig ausgeschlossen werden kann.

In an sich bekannter Weise kann jedes Ausklinkelement eine Arretierungseinrichtung umfassen, die derart ausgestaltet ist, dass ein in die Eingriffsöffnung eingebrachter Ausklinkschlüssel an dem Ausklinkelement arretiert wird, wenn sich das Ausklinkelement außerhalb seiner ersten Drehlage befindet, und ein Entnehmen des Ausklinkschlüssels nur in der der Arbeitsstellung der Treibbacke entsprechenden ersten Drehlage möglich ist. Dieser Ausgestaltung liegt die Überlegung zugrunde, dass durch das Arretieren des radial nach außen vorragenden Ausklinkschlüssels für einen Bediener sofort ersichtlich ist, dass sich die entsprechende Treibbacke nicht in ihrer Arbeitsstellung befinden kann.

Konkret kann der Arretiermechanismus ein Eingriffselement aufweisen, welches im Ausklinkelement radial zu seiner Drehachse im Bereich der Eingriffsöffnung beweglich angeordnet ist und derart geführt ist, dass es radial zu seiner Drehachse nach außen vorragt und aus der Eingriffsöffnung zurückgezogen ist, wenn sich das Ausklinkelement in seiner ersten Drehlage befindet, und in die Eingriffsöffnung eingreift und einen in diese eingesetzten Ausklinkschlüssel arretiert, wenn sich das Ausklinkelement außerhalb seiner ersten Drehlage befindet. Dazu kann ein Ausklinkschlüssel eine Aussparung aufweisen, in welche das Eingriffselement eingreift.

Bevorzugt ist jedes Ausklinkelement in einer Aufnahmebohrung des Futterkörpers angeordnet, in deren radialer Wandung eine Vertiefung ausgebildet ist, in welche das Eingriffselement ragt, wenn sich das Ausklinkelement in seiner ersten Drehlage befindet. Somit ist das Eingriffselement mit einer Zwangsführung versehen, welche gewährleistet, dass er lediglich in seiner ersten Drehlage aus der Eingriffsöffnung zurückgezogen ist und in einer Drehlage des Ausklinkelements außerhalb seiner ersten Drehlage zwangsweise in die Eingriffsöffnung eingreift und einen in diese eingebrachten Ausklinkschlüssel arretiert. In konkreter Ausgestaltung kann das Eingriffselement als Kugel oder als Druckbolzen ausgebildet sein.

Gemäß einer weiteren Ausführungsform der Erfindung ist jedem Ausklinkelement ferner ein Rastmechanismus zu seiner Fixierung in seiner ersten Drehlage zugeordnet, um eine unbeabsichtigte Bewegung der Treibbacke von ihrer Arbeitsstellung in die Backenwechselstellung zu verhindern. Dieser kann eine im Ausklinkelement ausgebildete Aussparung umfassen, in welche ein korrespondierendes, im Futterkörper angeordnetes Rastelement eingreift, wenn sich das Ausklinkelement in seiner ersten Drehlage befindet. Bei dem Rastelement handelt es sich bevorzugt um eine federbetätigte Kugel oder um einen federbetätigten Zylinderstift. Dieser Ausgestaltung liegt die Überlegung zugrunde, dass auf die Treibbacke axial nach hinten gerichtete Kräfte wirken, beispielsweise eine durch ein elastisches Spannmittel, insbesondere eine Druckfeder aufgebrachte Kraft oder durch eine Axialkomponente der über die Verzahnung aufgebrachten Spannkraft. Ein derartiger Rastmechanismus dient dazu, das Ausklinkelement in seiner ersten Drehlage zu verrasten. Dies führt dazu, dass beim Verdrehen des Ausklinkelements von seiner ersten in seine zweite Drehlage ein gewisser Widerstand erst überwunden werden muss, sodass ein unbeabsichtigtes Verdrehen des Ausklinkelements ausgeschlossen ist und dem Bediener die Positionierung des Ausklinkelements in seiner ersten Dehlage erleichtert wird.

Ferner kann das Spannfutter einen Kontrollmechanismus umfassen, welcher derart ausgestaltet ist, dass eine Bewegung der Treibbacke von der Backenwechselstellung in die Arbeitsstellung nur möglich ist, wenn eine Spannbacke in der Nut des Futterkörpers angeordnet ist. Insbesondere soll eine Bewegung der Treibbacke von der Backenwechselstellung in die Arbeitsstellung nur dann möglich sein, wenn die Verzahnung der Treibbacke mit der Gegenverzahnung einer in die Führungsnut eingesetzten Spannbacke in Eingriff steht. Ein derartiger Kontrollmechanismus stellt sicher, dass beim Wechsel eines Spannbackensatzes das Einsetzen einer Spannbacke nicht übersehen und die Treibbacke trotzdem von der Backenwechselstellung in die Arbeitsstellung bewegt werden kann. Wird beispielsweise bei einem Vierbackenfutter eine Spannbacke vergessen, so kann dennoch grundsätzlich ein Werkstück eingespannt werden, jedoch könnte sich dieses beim Bearbeitungsvorgang aufgrund der auftretenden Zerspanungkräfte aus dem Spannfutter lösen und ein hohes Sicherheitsrisiko für die Umgebung darstellen. Durch einen derartigen Kontrollmechanismus kann eine solche Gefahr vermieden werden, da eine Bewegung der Treibbacke von der Backenwechselstellung in die Arbeitsstellung nur beim Vorhandensein einer Spannbacke in der Nut möglich ist.

Konkret kann der Kontrollmechanismus einen in radialer Richtung im Grundkörper der Treibbackeneinheiten zwischen einer inneren Freigabeposition, in welcher die Treibbacke axial beweglich ist, und einer äußeren Arretierposition, in welcher er in eine korrespondierende Ausnehmung der Treibbacke eingreift und diese in der Backenwechselstellung arretiert, bewegbaren Arretierstift und einen in einer vorderseitigen Öffnung des Grundkörpers der Treibbacke angeordneten Kontrollbolzen, der zwischen einer vorderen Endstellung, in welcher er in die Führungsnut des Futterkörpers ragt, und einer hinteren Endstellung, in welcher er sich vollständig außerhalb der Führungsnut des Futterkörpers befindet, umfassen, wobei der Kontrollmechanismus derart ausgebildet ist, dass der Arretierstift die Arretierposition einnimmt, wenn die Treibbacke in der Backenwechselstellung ist und sich keine Spannbacke in der Führungsnut befindet, und von dieser gegen eine Drucckraft über eine Keilanordnung durch den Kontrollbolzen in die innere Freigabeposition bewegt wird, wenn der Kontrollbolzen durch Einsetzen einer Spannbacke in die Führungsnut nach hinten gedrückt wird. Mit anderen Worten ist ein Kontrollbolzen vorgesehen, welcher in die Führungsnut ragt und durch welchen erkannt wird, ob sich eine Spannbacke in der Führungsnut befindet. Liegt keine Spannbacke in der Führungsnut an, so befindet sich der Kontrollbolzen in seiner vorderen Endstellung und gibt über eine Keilanordnung den Arretierstift frei, sodass dieser die Treibbacke in der Backenwechselstellung arretiert. Wird eine Spannbacke in die Führungsnut eingesetzt, so wird der Kontrollbolzen durch die anliegende Spannbacke nach hinten gedrückt und bewegt über die Keilanordnung den Arretierstrift in die Freigabeposition. Lediglich in der Freigabeposition des Arretierstifts kann die Treibbacke in ihre Arbeitsstellung gebracht werden.

Ferner kann der Kontrollbolzen eine sich über einen Teilabschnitt in seiner Längsrichtung erstreckende Nut aufweisen, in die ein im Grundkörper der Treibbackeneinheit angeordnetes Gegenelement eingreift, um durch Anlage an einem Nutende insbesondere seine vordere Endstellung zu definieren. Die auf den Arretierstift nach außen wirkende Druckkraft kann durch eine sich gegen den Grundkörper der Treibbackeneinheit stützende Schraubendruckfeder aufgebracht werden.

In bevorzugter Ausgestaltung weist der Kontrollbolzen vorderseitig eine ebene Stirnfläche auf, die sich in radialer Richtung mindestens über eine Länge, welche der Teilung der Verzahnung der Treibbacken entspricht, erstreckt. Die Teilung der Verzahnung entspricht dabei dem Versatz zweier benachbarter Zähne zueinander, sodass eine fehlerhafte Erkennung, ob eine Spannbacke in die Führungsnut eingesetzt ist, vermieden werden kann, da eine versehentliche Verschiebung des Kotrollbolzens in den Bereich zwischen zwei Zähnen der Gegenverzahnung einer eingesetzten Spannbacke aufgrund dessen Erstreckung in Radialrichtung ausgeschlossen ist.

Der Koppelmechanismus, durch welchen eine axiale Bewegung des Futterkolbens in radiale Bewegungen der Treibbackeneinheit umgesetzt wird, kann als Keilhakenmechanismus ausgebildet sein. Dabei sind am Futterkolben keilförmig ausgebildete Haken angeordnet, die in korrespondierende, an den Grundkörpern der Treibbackeneinheiten ausgebildeten Gegenhaken eingreifen, um über eine Keilanordnung eine axiale Bewegung des Futterkolbens in radiale Bewegungen der Treibbackeneinheiten umzusetzen. Alternativ kann der Koppelmechanismus als Winkelhebelmechanismus ausgebildet sein, sodass jeder Treibbackeneinheit zugeordnet ein in einer die zentrale Futterachse enthaltenden Schwenkebene schwenkbar gelagertes Hebelelement vorgesehen ist, welches über einen Hebelarm von dem Futterkolben in axiale Richtung betätigt wird und mit einem anderen Hebelarm die zugehörige Treibbackeneinheit radial anlenkt.

In weiterer Ausgestaltung der Erfindung sind im Futterkörper Durchgangsöffnungen vorgesehen, welche die Führungsnuten und die darunter angeordneten Führungstaschen jeweils verbinden. Die Durchgangsöffnungen sind erforderlich, um eine mechanische Kopplung der Treibbacken mit in die Führungsnut eingesetzten Spannbacken zu ermöglichen. Bevorzugt weist jeder Grundkörper der Treibbackeneinheiten einen die jeweilige Durchgangsöffnung durchsetzenden und bis in die Führungsnut ragenden Vorsprung auf.

In weiterer Ausgestaltung dieser Ausführungsform ist in jeder Führungsnut ein radial mit den Treibbackeneinheiten bewegbares flächiges Abdichtelement vorgesehen, welches am Nutgrund anliegt und eine zentrale Aussparung aufweist, in die der Vorsprung des Grundkörpers axial eingreift, wobei in bevorzugter Weise das Abdichtelement den Vorsprung ringförmig, insbesondere formschlüssig umgibt und/oder an dem Vorsprung mit Spiel anliegt. Bevorzugt ist das Abdichtelement so ausgestaltet, dass es sich in jeder radialen Position des Grundkörpers radial und in Breitenrichtung der Führungsnut über die gesamte Durchgangsöffnung erstreckt. Durch ein derartiges Abdichtelement wird eine Dichtwirkung dahingehend erzielt, dass die Durchgangsöffnung weitgehend überdeckt ist und somit das Eindringen von Schmutz und Flüssigkeiten in die Führungstasche erschwert wird.

Bevorzugt weisen die Führungsnuten jeweils einen T-förmigen Querschnitt mit einem vorderen Führungsnutabschnitt, an dem Führungsmittel für eine Spannbacke vorgesehen sind, und einem gegenüber diesem verbreiterten hinteren Endabschnitt, in welchem das Abdichtelement angeordnet ist, auf. Bevorzugt sind im Übergang vom hinteren Endabschnitt zum vorderen Führungsnutabschnitt Führungsschultern zum Halten des Abdichtelements in axialer Richtung ausgebildet, die insbesondere parallel zum Nutgrund der Führungsnut orientiert sind. Dieser Ausgestaltung liegt die Überlegung zugrunde, dass durch die Anordnung des Abdichtelements in einem eine Verbreiterung bildenden hinteren Endabschnitt der Führungsnut dieses dort in axialer Richtung gehalten wird und sich nicht unbeabsichtigt axial nach vorne aus der Führungsnut herausbewegen kann, wobei es gleichzeitig noch radial durch den in die Aussparung eingreifenden Vorsprung des Grundkörpers beweglich ist. Gleichzeitig vereinfacht eine derartige Ausgestaltung der Führungsnut die Montage des Spannfutters, da das flächige Abdichtelement von einer radialen Außenseite des Spannfutters in den hinteren Endabschnitt der Führungsnut direkt eingesetzt werden kann. Bevorzugt erstreckt sich das Abdichtelement im Wesentlichen über die gesamte Breite des hinteren Endabschnitts der Führungsnut. Dies bewirkt, dass in Breitenrichtung der Führungsnut zwischen den Nutwänden und dem Abdichtelement lediglich ein kleiner Spalt verbleibt, durch welchen Schmutz und/oder Flüssigkeiten eindringen können, wodurch eine die radiale Bewegbarkeit der Treibbackeneinheit in der Führungsnut behindernde Ansammlung von Schmutz, insbesondere von Spänen vermieden wird.

Ferner kann das Abdichtelement in seiner zum Nutgrund weisenden Seite eine die Aussparung umgebende umlaufende Nut zur Aufnahme eines Dichtelements aufweisen. Bevorzugt liegt die umlaufende Nut außerhalb des von der Durchgangsöffnung überstrichenen Bereichs des Abdichtelements, wobei in der umlaufenden Nut ein O-Ring angeordnet sein kann, um einen Eindringen von Schmutz und/oder Flüssigkeiten zwischen dem Nutgrund und dem Abdichtelement entgegen zu wirken.

Ferner kann ein zwischen der Treibbacke und dem Grundkörper der Treibbackeneinheit und/oder ein zwischen dem Kontrollbolzen und der korrespondierenden Bohrung des Grundkörpers ausgebildeter Spalt mittels Dichtungselementen abgedichtet sein, um ein Eindringen von Schmutz und Flüssigkeiten in den Grundkörper zu vermeiden. Konkret können die Treibbacke und/oder der Kontrollbolzen ringförmig umlaufende Nuten aufweisen, in welchen O-Ringe oder Quadringe angeordnet sind. Diese können durch die Anlage an der Öffnung, bzw. der Bohrung des Grundkörpers gequetscht oder verpresst sein, sodass sie das Eindringen von Schmutz und Flüssigkeiten in den Grundkörper vermeiden.

Darüber hinaus kann der zwischen dem Grundkörper der Treibbackeneinheit und der vorderen Wandung der Führungstasche ausgebildete Spalt durch ein Dichtelement gegen das Eindringen von Schmutz und Flüssigkeiten abgedichtet sein. Dazu kann in der Führungstasche des Futterkörpers innenseitig um die Durchgangsöffnung eine ringförmig umlaufende Nut ausgebildet sein, in welcher ein Dichtelement, insbesondere ein O-Ring angeordnet ist.

In weiterer Ausgestaltung dieser Ausführungsform sind Abdichtmittel vorgesehen, um den jeweils zwischen den Ausklinkelementen und der jeweiligen Aufnahmebohrung des Futterkörpers ausgebildeten Ringspalt abzudichten. Bevorzugt ist als Abdichtmittel jeweils ein ringförmig umlaufender O-Ring oder ein Quadring vorgesehen, welcher in einer im Ausklinkelement oder im Futterkörper ausgebildeten ringförmig umlaufenden Nut angeordnet ist. Durch eine derartige Ausgestaltung wird dem Eindringen von Schmutz und/oder Flüssigkeiten durch den zwischen dem jeweiligen Ausklinkelement und der korrespondierenden Aufnahmebohrung des Futterkörpers ausgebildeten Spalt entgegengewirkt. Gleichzeitig wird durch ein derartiges Abdichtmittel vermieden, dass Schmiermittel in Folge der Fliehkräfte durch die Aufnahmebohrung radial nach außen aus dem Futterkörper austreten können.

Hinsichtlich weiterer vorteilhafter Ausgestaltungen der Erfindung wird auf die Unteransprüche, sowie auf die nachfolgende Beschreibung eines Ausführungsbeispiels unter Bezugnahme auf die beiliegende Zeichnung verwiesen. In der Zeichnung zeigt:
- Figur 1: ein Spannfutter gemäß der vorliegenden Erfindung mit einer eingesetzten Spannbacke in einer Teilschnittansicht;
- Figur 2: das Spannfutter aus Figur 1 in einer Detailschnittansicht;
- Figur 3: das Spannfutter aus Figur 1 ohne eingesetzte Spannbacke in einer Teilschnittansicht;
- Figur 4: das Spannfutter aus Figur 3 in einer Detailschnittansicht.

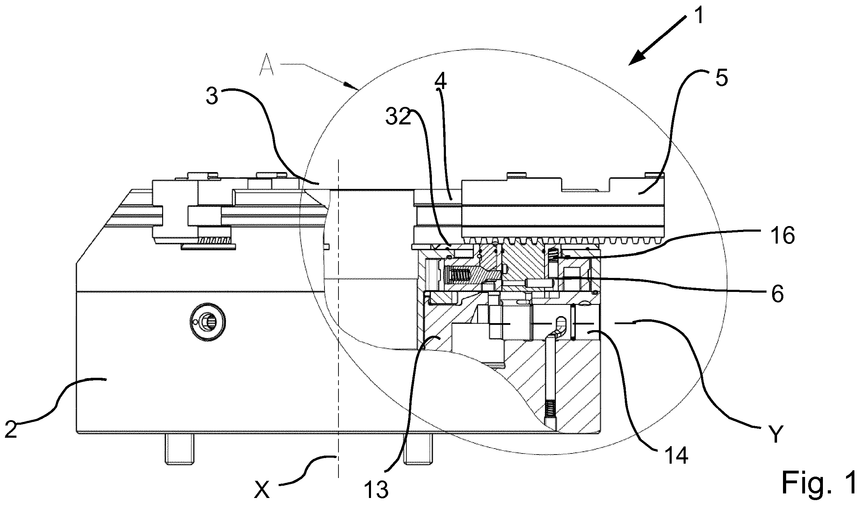

Die Figuren 1 bis 4 zeigen ein Spannfutter 1 für Werkzeugmaschinen gemäß der vorliegenden Erfindung, welches als Dreibackenfutter ausgebildet ist. Das Spannfutter 1 besitzt einen eine Futterachse X definierenden Futterkörper 2, der in seiner vorderen Stirnfläche 3 insgesamt drei über den Umfang verteilte, sich radial zur Futterachse X erstreckende Führungsnuten 4 zur Aufnahme von Spannbacken 5 aufweist.

Jeder Führungsnut 4 ist eine Treibbackeneinheit 6 zugeordnet. Diese weist einen Grundkörper 7 auf, welcher in einer unterhalb der Führungsnut 4 im Futterkörper 2 ausgebildeten Führungstasche 8 parallel zu der Führungsnut 4 zwischen einer inneren und einer äußeren Endposition bewegbar ist. Ferner sind im Futterkörper 2 Durchgangsöffnungen 9 vorgesehen, welche jeweils die Führungsnut 4 und die darunter angeordnete Führungstasche 8 verbinden. Jeder Grundkörper 7 weist einen die jeweilige Durchgangsöffnung 9 axial durchsetzenden und in die Führungsnut 4 ragenden Vorsprung 10 auf.

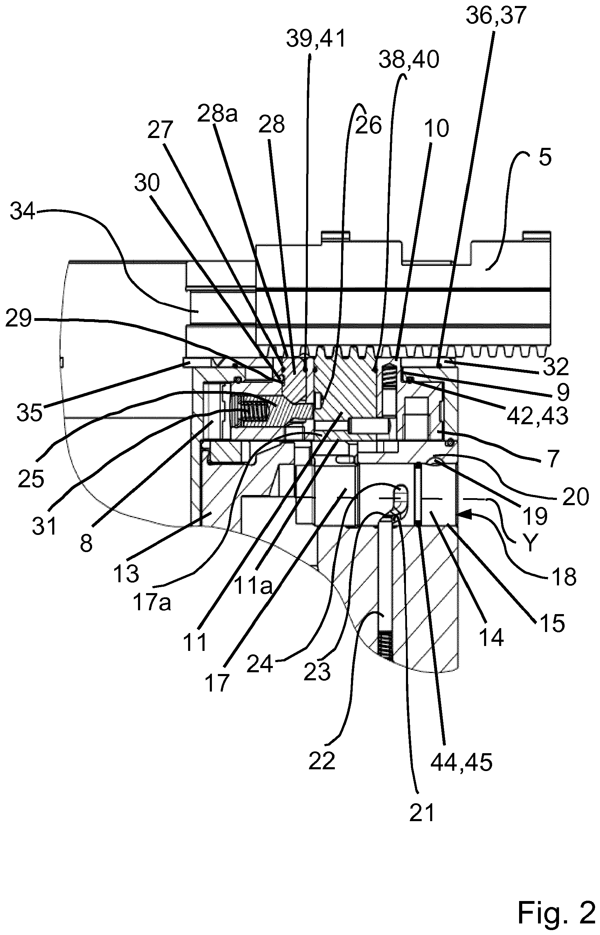

Ferner umfasst jede Treibbackeneinheit 6 eine am Grundkörper 7 gehaltene und relativ zu diesem in axialer Richtung bewegbare Treibbacke 11, welche - wie in den Figuren 1 und 2 dargestellt ist - über eine vorderseitige Verzahnung 12 mit einer korrespondierenden Gegenverzahnung der Spannbacke 5 in Eingriff steht.

Als Antrieb für die Treibbackeneinheiten 6 besitzt das Spannfutter 1 einen im Futterkörper 2 axial bewegbaren und motorisch, hydraulisch oder pneumatisch antreibbaren Futterkolben 13. Prinzipiell ist es auch denkbar, eine manuelle Betätigung beispielsweise über eine Spindel vorzusehen. Vorliegend ist der Futterkolben 13 zwischen einer vorderen Endposition und einer hinteren Endposition im Futterkörper 2 axial bewegbar angeordnet und über einen als Keilhakenmechanismus ausgebildeten Koppelmechanismus mit den Grundkörpern 7 der Treibbackeneinheiten 6 gekoppelt, um eine axiale Bewegung des Futterkolbens 13 in eine gemeinsame radiale Bewegung der Treibbackeneinheiten 6 umzusetzen. Konkret ist der Keilhakenmechanismus so ausgestaltet, dass die vordere Endposition des Futterkolbens 13 der äußeren Endposition der Grundkörper 7 entspricht.

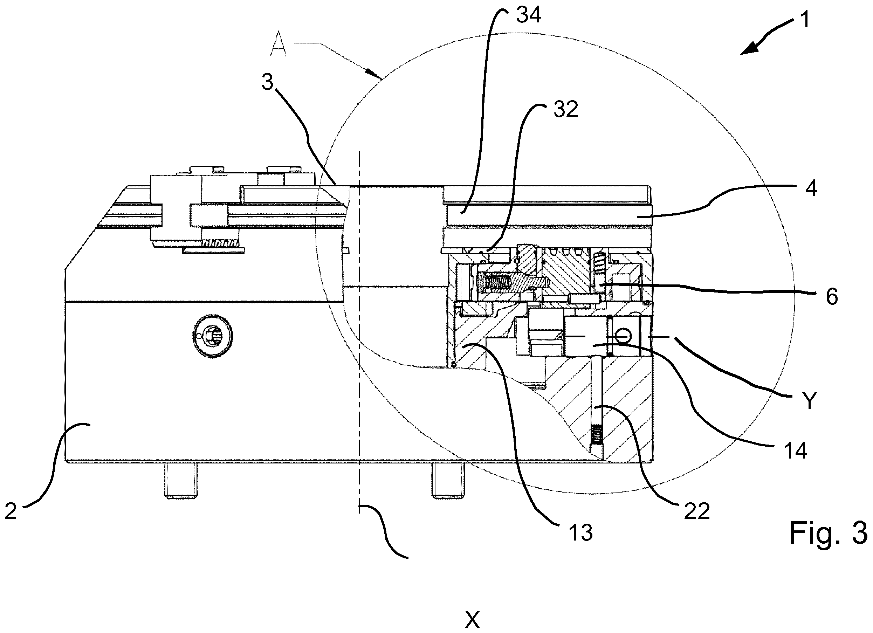

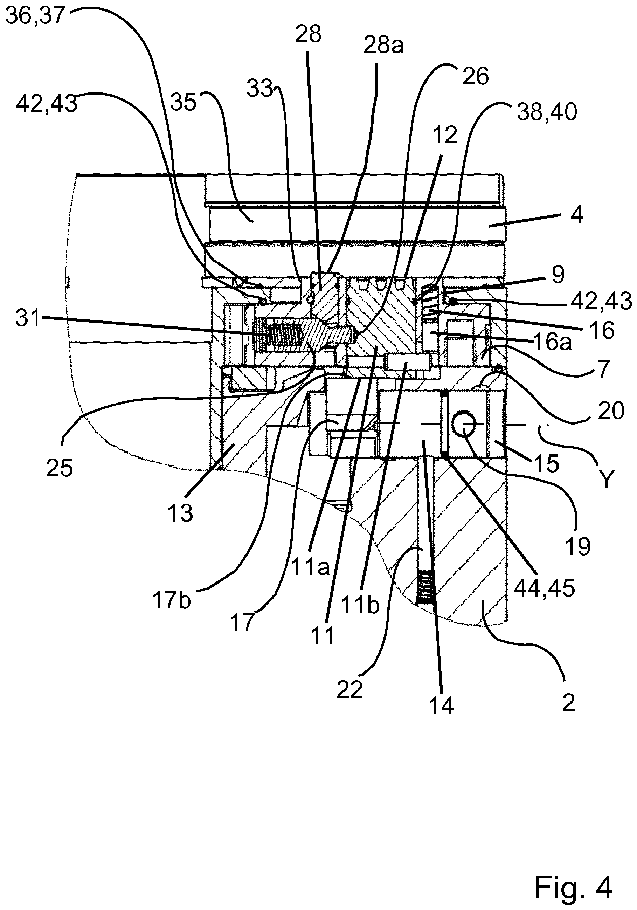

Jeder Treibbackeneinheit 6 ist ein Ausklinkmechanismus mit einem Ausklinkelement 14 zugeordnet. Dieses ist in einer Aufnahmebohrung 15 in dem Futterkörper 2 um eine radial zur Futterachse X liegende Drehachse Y drehbar gelagert. Mit der Treibbacke 11 ist das Ausklinkelement 14 derart gekuppelt, dass durch seine Drehung die Treibbacke 11 zwischen einer hinteren Backenwechselstellung und einer vorderen Arbeitsstellung bewegbar ist. In der vorderen Arbeitsstellung, die einer ersten Drehlage des Ausklinkelements 14 entspricht und in den Figuren 1 und 2 dargestellt ist, ist ein Backenwechsel nicht möglich. In der hinteren Backenwechselstellung, die einer zweiten Drehlage des Ausklinkelements 14 entspricht und in den Figuren 3 und 4 dargestellt ist, ist die Treibbacke 11 so weit aus der Führungsnut 4 abgesenkt, dass ein Backenwechsel möglich ist. Dazu wirkt auf die Treibbacke 11 eine Druckfeder 16, welche sich gegen den Grundkörper 7 abstützt und eine axial nach hinten gerichtete Druckkraft auf die Treibbacke 11 ausübt. Konkret wird die Kraft von der Schraubendruckfeder 16 über einen sich in axialer Richtung anschließenden Zwischenbolzen 16a übertragen, welcher mit seiner Stirnfläche an einem radial nach außen von der Treibbacke 11 vorstehenden Betätigungsbolzen 11b anliegt.

Konkret weist das Ausklinkelement 14 einen Exzenternocken 17 auf, welcher an der hinteren Stirnfläche der Treibbacke 11 anliegt und derart ausgestaltet ist, dass er diese in der Arbeitsstellung positioniert, wenn sich das Ausklinkelement 14 in seiner ersten Drehlage befindet. Das Drehen des Ausklinkelements 14 erfolgt mittels eines Ausklinkschlüssels, der von außen in eine dafür vorgesehene Eingriffsöffnung 18 des Ausklinkelements 14 eingebracht wird.

Um einen labilen Gleichgewichtszustand zwischen dem Ausklinkelement 14 und der korrespondierenden Treibbacke 11 zu vermeiden, besitzt der Exzenternocken 17 an seiner Außenkontur eine in der ersten Drehlage des Ausklinkelements 14 flächig an der hinteren Stirnfläche 11a der zugehörigen Treibbacke 11 anliegende ebene Anlagefläche 17a, sowie eine in der zweiten Drehlage des Ausklinkelements 14 flächig an der hinteren Stirnfläche der zugehörigen Treibbacke 11 anliegende ebene Kontaktfläche 17b.

Jedes Ausklinkelement 14 umfasst ferner eine Arretierungseinrichtung. Ein in die Eingriffsöffnung 18 eingebrachter Ausklinkschlüssel wird dabei in dem Ausklinkelement 14 arretiert, wenn sich das Ausklinkelement 14 außerhalb seiner der Arbeitsstellung der Treibbacke 11 entsprechenden ersten Drehlage befindet. Ein Entnehmen des Ausklinkschlüssels aus der Eingriffsöffnung 18 ist somit nur in der ersten Drehlage des Ausklinkelements 14 möglich.

Konkret umfasst der Arretiermechanismus ein als Kugel 19 ausgebildetes Eingriffselement, welches im Ausklinkelement 14 radial zu seiner Drehachse Y im Bereich der Eingriffsöffnung 18 beweglich angeordnet ist. Die Kugel 19 ist derart geführt, dass sie radial zu der Drehachse Y nach außen vorragt und aus der Eingriffsöffnung 18 zurückgezogen ist, wenn sich das Ausklinkelement 14 in seiner ersten Drehlage befindet. Wenn sich das Ausklinkelement 14 außerhalb seiner ersten Drehlage befindet, greift die Kugel 19 in die Eingriffsöffnung 18 ein und arretiert einen in diese eingesetzten Ausklinkschlüssel. Zur Realisierung der Führung der Kugel 19 ist in der radialen Wandung der Aufnahmebohrung 15 eine Vertiefung 20 ausgebildet, in welche die Kugel 19 ragt, wenn sich das Ausklinkelement 14 in seiner ersten Drehlage befindet.

Das Spannfutter 1 umfasst ferner einen Sicherungsmechanismus, der derart ausgebildet ist, dass eine Drehung des Ausklinkelements 14 aus seiner ersten Drehlage in seine der Backenwechselstellung der Treibbacke 11 entsprechende zweite Drehlage nur möglich ist, wenn sich der Futterkolben 13 in seiner vorderen Endposition befindet. Ferner wird der Futterkolben 13 in dieser vorderen Endposition arretiert, wenn sich das Ausklinkelement 14 in seiner zweiten Drehlage befindet. Dazu weist das Ausklinkelement 14 eine in seiner Außenfläche ausgebildete Steuernut 21 auf, in welche ein am Futterkörper 2 angeordneter Steuerbolzen 22 eingreift. Die Steuernut 21 umfasst einen wendelartigen Nutabschnitt 23, welcher sich in der Weise entlang eines Umfangsabschnitts des Ausklinkelements 14 erstreckt, dass das Ausklinkelement 14 bei einer Drehung um die Drehachse Y gleichzeitig translatorisch entlang seiner Drehachse Y bewegt wird, um in Eingriff mit dem Futterkolben 13 zu kommen oder diesen freizugeben. Durch den wendelartigen Nutabschnitt 23 wird somit eine Zwangsführung des Ausklinkelements 14 dahingehend realisiert, dass es entlang seiner Drehachse Y axial verstellt wird, wenn es um die Drehachse Y verdreht wird. Dabei nimmt das Ausklinkelement 14 in seiner ersten Drehlage eine radial äußere Position ein, in welcher es außer Eingriff von dem Futterkolben 13 steht und in der zweiten Drehlage eine radial innere Position ein, in der es mit dem Futterkolben 13 in Eingriff kommt, um diesen in seiner vorderen Endposition zu arretieren. Vorliegend schließt sich an den wendelartigen Nutabschnitt 23 noch ein in Umfangsrichtung erstreckender Nutabschnitt 24 an.

Des Weiteren umfasst das Spannfutter 1 einen Kontrollmechanismus, welcher gewährleistet, dass eine Bewegung der Treibbacke 11 von der Backenwechselstellung in die Arbeitsstellung nur möglich ist, wenn eine Spannbacke 5 in der Führungsnut 4 des Futterkörpers 2 angeordnet ist und die Verzahnung 12 von der Treibbacke 11 mit der Gegenverzahnung der eingesetzten Spannbacke 5 in Eingriff steht. Dazu umfasst der Kontrollmechanismus einen im Grundkörper 7 bewegbaren Arretierstift 25. Dieser ist relativ zum Grundkörper 7 in radialer Richtung bewegbar zwischen einer inneren Freigabeposition, in welcher die Treibbacke 11 axial beweglich ist, und einer äußeren Arretierposition, in welcher er in eine korrespondierende Ausnehmung 26 der Treibbacke 11 eingreift und diese ihrer Backenwechselstellung arretiert. Darüber hinaus umfasst der Kontrollmechanismus einen in einer vorderseitigen Bohrung 27 des Grundkörpers 7 angeordneten Kontrollbolzen 28, der zwischen einer vorderen Endstellung, in welcher er in die Führungsnut 4 des Futterkörpers 2 ragt, und einer hinteren Endstellung, in welcher er sich vollständig außerhalb der Führungsnut des Futterkörpers 2 befindet, bewegbar ist. Um eine in die Führungsnut 4 eingesetzte Spannbacke 5 sauber erkennen zu können, weist der Kontrollbolzen 28 vorderseitig eine ebene Stirnfläche 28a auf, die sich in radialer Richtung mindestens über eine Länge, welche der Teilung der Verzahnung 12 der Treibbacke 11 entspricht, erstreckt. Der Kontrollbolzen 28 weist nur eine sich über einen Teilabschnitt in seiner Längsrichtung erstreckenden Nut 29 auf, in welcher ein im Grundkörper 7 angeordnetes Gegenelement 30 eingreift, um durch Anlage einem Ende der Nut 29 die vordere Endstellung zu definieren.

Der Kontrollmechanismus ist derart ausgebildet, dass der Arretierstift 25 die Arretierposition einnimmt, wenn die Treibbacke 11 in der Backenwechselstellung ist und sich keine Spannbacke 5 in der Führungsnut 4 befindet, wie dies in den Figuren 3 und 4 dargestellt ist. Wird eine Spannbacke 5 in die Führungsnut 4 eingesetzt, so wird der Kontrollbolzen 28 von der Spannbacke 5 in seine hintere Endstellung bewegt, wodurch der Arretierstift 25 gegen einen durch eine Schraubendruckfeder 31 aufgebrachte Druckkraft über eine Keilanordnung in die innere Freigabeposition bewegt wird. Dazu besitzen sowohl der Kontrollbolzen 28, als auch der Arretierstift 25 aneinander anliegende konusartige Abschnitte.

Darüber hinaus ist in jeder Führungsnut 4 ein radial mit den Treibbackeneinheiten 6 bewegbares flächiges Abdichtelement 32 vorgesehen, welches am Nutgrund anliegt und eine zentrale Aussparung 33 aufweist, in die der Vorsprung 10 des Grundkörpers 7 axial eingreift. Das Abdichtelement 32 umgibt den Vorsprung 10 dabei ringförmig formschlüssig und liegt an dem Vorsprung 10 mit Spiel an. Das Abdichtelement 32 ist so ausgestaltet, dass es sich in jeder radialen Position des Grundkörpers 7 radial und in Breitenrichtung der Führungsnut 4 über die gesamte Durchgangsöffnung 9 erstreckt. Dadurch wird dem Eindringen von Flüssigkeiten und/oder Schmutz in den Bereich der Führungstasche 8 entgegengewirkt.

Dazu weist die Führungsnut 4 einen T-förmigen Querschnitt mit einem vorderen Führungsnutabschnitt 34 mit Führungsmitteln für eine Spannbacke und einen gegenüber diesem verbreiterten hinteren Endabschnitt 35, in welchem das Abdichtelement 32 angeordnet ist, auf. Im Übergang vom hinteren Endabschnitt 35 zum vorderen Führungsnutabschnitt 34 sind Führungsschultern zum Halten des Abdichtelements 32 in axialer Richtung ausgebildet, die parallel zum Nutgrund der Führungsnut 4 orientiert sind. Das Abdichtelement 31 erstreckt sich über die gesamte Breite des hinteren Endabschnitts 35 der Führungsnut 4.

Ferner weist das Abdichtelement 32 in seiner zum Nutgrund weisenden Seite eine die Aussparung 33 umgebende umlaufende Nut 36 zur Aufnahme eines Dichtelements auf. Die umlaufende Nut 36 liegt dabei vollständig außerhalb des von der Durchgangsöffnung 9 überstrichenen Bereichs des Abdichtelements 32. Dadurch wird das Eindringen von Schmutz und/oder Flüssigkeiten zwischen dem Nutgrund und dem Abdichtelement 32 in jeder radialen Lage des Abdichtelements 32 wirksam vermieden. In der umlaufenden Nut ist ein O-Ring 37 angeordnet.

Aus dem gleichen Grund ist in der Treibbacke 11 und in dem Kontrollbolzen 27 jeweils eine ringförmig umlaufende Nut 38, 39 ausgebildet, in welcher jeweils in O-Ring 40, 41 angeordnet ist, um den zwischen der Treibbacke 11 und dem Grundkörper 7, sowie den zwischen dem Kontrollbolzen 28 und dem Grundkörper 7 ausgebildeten Spalt gegen ein Eindringen von Schmutz und Flüssigkeiten abzudichten. Auch in der Führungstasche 8 ist innenseitig umlaufend um die Durchgangsöffnung 9 eine ringförmig umlaufende Nut 42 ausgebildet, in welcher in O-Ring 43 angeordnet ist, um den zwischen dem Grundkörper 7 und der vorderen Wandung der Führungstasche 9 ausgebildeten Spalt gegen das Eindringen von Schmutz und Flüssigkeiten abzudichten.

Ferner sind bei dem Spannfutter 1 Abdichtmittel vorgesehen, um den jeweils zwischen den Ausklinkelementen 14 und der Aufnahmebohrung 15 des Futterkörpers 2 ausgebildeten Ringspalt abzudichten. Konkret weisen dazu die Ausklinkelemente 14 eine ringförmig umlaufende Nut 44 auf, in welche ein O-Ring 45 eingesetzt ist.

Soll bei einem Spannfutter 1, wie es in den Figuren 1 und 2 mit eingebrachter Spannbacke 5 dargestellt ist, ein Backenwechsel vorgenommen werden, so ist zunächst der Futterkolben 13 in seine vorderen Endposition zu bewegen, womit einhergeht, dass sich der Grundkörper 7 der Treibbackeneinheit 6 in seine äußere Endposition bewegt. Dadurch wird das Ausklinkelement 14 freigegeben, so dass eine Drehung von seiner ersten in seine zweite Drehlage möglich ist. Zur Drehung des Ausklinkelements 14 von seiner ersten in seine zweite Drehlage ist ein Ausklinkschlüssel in diese einzubringen und zu drehen. Da aufgrund der Zwangsführung des Ausklinkelements 14 durch den in die Steuernut 21 eingreifenden Steuerbolzen 22 mit der Drehbewegung gleichzeitig eine translatorische Bewegung radial nach innen einhergeht, wird der Futterkolben 13 in seiner vorderen Endposition arretiert.

Gleichzeitig wird durch die Drehbewegung des Ausklinkelements 14 aufgrund des an der Treibbacke 11 anliegenden Exzenternockens 17 die Treibbacke 11 von ihrer Arbeitsstellung in ihre Backenwechselstellung abgesenkt, sodass anschließend die Spannbacke 5 aus der Führungsnut 4 radial nach außen herausgezogen werden kann. Auf die Treibbacke 11 wirkt eine axial nach hinten gerichtete Kraft, welche von der sich gegen den Grundkörper 7 abstützenden Schraubendruckfeder 16 aufgebracht wird. Durch die ebene Anlagefläche 17a, welche in der ersten Drehlage des Ausklinkelements 14 an der hinteren Stirnfläche 11a der Treibbacke 11 anliegt, wird die Treibbacke 11 beim Drehen des Ausklinkelements 14 zunächst gegen die auf sie wirkende axial nach hinten gerichtete Federkraft bewegt, sodass grundsätzlich in der ersten Drehlage ein stabiler Gleichgewichtszustand zwischen Ausklinkelement 14 und der korrespondierenden Treibbacke 11 vorliegt.

Bei der Entnahme der Spannbacke 5 wird der Kontrollbolzen 28 freigegeben, sodass sich dieser in seine vordere Endstellung bewegt und dabei den Arretierstift 25 derart freigibt, dass dieser sich betätigt durch die Schraubendruckfeder 31 in seine äußere Arretierposition bewegt und die Treibbacke 11 in der Backenwechselstellung arretiert, wie dies in den Figuren 3 und 4 dargestellt ist.

Wird im Anschluss eine neue Spannbacke 5 in die Führungsnut eingesetzt, so wird der Kontrollbolzen 28 durch die in die Führungsnut 4 eingesetzte Spannbacke 5 in seine hintere Endstellung bewegt. Durch die Keilanordnung wird der Arretierstift 25 gegen die durch die Schraubendruckfeder 30 aufgebrachte Druckkraft in seine innere Freigabeposition bewegt. Dadurch wiederrum wird die Treibbacke 11 freigegeben, sodass durch Drehung des Ausklinkelements 14 von seiner zweiten Drehlage in seine erste Drehlage die Treibbacke 11 in Eingriff mit der eingesetzten Spannbacke 5 gebracht wird. Gleichzeitig vollzieht das Ausklinkelement 14 eine translatorische Bewegung in seine radial äußere Position und gibt den Futterkolben 13 wieder frei. Da die Kugel 19 in der ersten Drehlage wieder in die Vertiefung 20 ragt, wird der Ausklinkschlüssel freigegeben und kann aus der Eingriffsöffnung 18 entnommen werden.

### Bezugszeichenliste

- 1: Spannfutter
- 2: Futterkörper
- 3: vordere Stirnfläche
- 4: Führungsnut
- 5: Spannbacke
- 6: Treibbackeneinheit
- 7: Grundkörper
- 8: Führungstasche
- 9: Durchgangsöffnung
- 10: Vorsprung
- 11: Treibbacke
- 11a: hintere Stirnfläche
- 11b: Betätigungsbolzen
- 12: Verzahnung
- 13: Futterkolben
- 14: Ausklinkelement
- 15: Aufnahmebohrung
- 16: Druckfeder
- 16a: Zwischenbolzen
- 17: Exzenternocken
- 17a: Anlagefläche
- 17b: Kontaktfläche
- 18: Eingriffsöffnung
- 19: Kugel
- 20: Vertiefung
- 21: Steuernut
- 22: Steuerbolzen
- 23: wendelartiger Nutabschnitt
- 24: weiterer Nutabschnitt
- 25: Arretierstift
- 26: Ausnehmung
- 27: vorderseitige Bohrung
- 28: Kontrollbolzen
- 28a: ebene Stirnfläche
- 29: Nut
- 30: Gegenelement
- 31: Schraubendruckfeder
- 32: Abdichtelement
- 33: Aussparung
- 34: vorderer Führungsnutabschnitt
- 35: hinterer Endabschnitt
- 36, 38, 39, 42, 44: Nut
- 37,40,41,43,45: O-Ring

- X: Futterachse
- Y: Drehachse des Ausklinkelements

## Patentansprüche

1. Spannfutter (1) für Werkzeugmaschinen, insbesondere für Drehmaschinen, mit
einem eine Futterachse (X) definierenden Futterkörper (2), der in seiner vorderen Stirnfläche (3) mehrere sich radial zu der Futterachse (X) erstreckende Führungsnuten (4) zur Aufnahme von Spannbacken (5) aufweist,
wobei jeder Führungsnut (4) eine Treibbackeneinheit (6) zugeordnet ist, die einen Grundkörper (7) aufweist, welcher in einer hinter der Führungsnut (4) im Futterkörper (2) ausgebildeten Führungstasche (8) parallel zu der Führungsnut (4) zwischen einer inneren und einer äußeren Endposition bewegbar ist, und eine am Grundkörper (7) gehaltene und relativ zu diesem in axialer Richtung bewegbare Treibbacke (11) umfasst, über eine vorderseitige Verzahnung (12) mit einer korrespondierenden Gegenverzahnung einer Spannbacke (5) in Eingriff bringbar ist,
einem im Futterkörper (2) axial bewegbaren Futterkolben (13), der zwischen einer vorderen Endposition und einer hinteren Endposition im Futterkörper (2) bewegbar ist und über einen Koppelmechanismus mit den Grundkörpern (7) der Treibbackeneinheiten (11) gekoppelt ist, um eine axiale Bewegung des Futterkolbens (13) in radiale Bewegungen der Treibbackeneinheiten (6) umzusetzen,
wobei (6) mindestens ein Ausklinkmechanismus mit einem Ausklinkelement (14) vorgesehen ist, welches in dem Futterkörper (2) relativ zu diesen bewegbar angeordnet ist und mit mindestens einer Treibbacke (11) gekoppelt ist, um durch Bewegen des Ausklinkelements (14) die Treibbacke (11) zwischen einer hinteren Backenwechselstellung, in welcher die Verzahnung (12) der Treibbacke so weit aus der Führungsnut (4) abgesenkt ist, dass ein Backenwechsel möglich ist, und einer vorderen Arbeitsstellung, in welcher ein Backenwechsel nicht möglich ist, zu verstellen,
wobei
ein Sicherungsmechanismus vorgesehen und derart ausgebildet ist, dass eine Bewegung des Ausklinkelements (14) aus einer der Arbeitsstellung der Treibbacke (11) entsprechenden ersten Lage in eine der Backenwechselstellung der Treibbacke (11) entsprechenden zweiten Lage nur möglich ist, wenn sich der Futterkolben (13) in einer definierten axialen Sicherungsposition befindet, und der Futterkolben (13) in der Sicherungsposition arretiert wird, wenn sich das Ausklinkelement (14) in seiner zweiten Lage befindet, wobei insbesondere die Sicherungsposition des Futterkolbens (13) seiner vorderen Endposition entspricht, wobei
jeder Treibbackeneinheit (6) genau ein Ausklinkmechanismus mit einem Ausklinkelement (14) zugeordnet ist,
wobei jedes Ausklinkelement (14) um jeweils eine quer zur Futterachse (X), insbesondere radial liegende Drehachse (Y) drehbar gelagert und mit der dazugehörigen Treibbacke (11) derart gekoppelt ist, dass eine erste Drehlage des Ausklinkelements (14) der Arbeitsstellung der zugehörigen Treibbacke (11) und eine zweite Drehlage des Ausklinkelements (14) der Backenwechselstellung der zugehörigen Treibbacke (11) entspricht, **dadurch gekennzeichnet, dass** jedes Ausklinkelement (14) in dem Futterkörper drehbar gelagert ist.

2. Spannfutter (1) nach Anspruch 1, **dadurch gekennzeichnet, dass** die Ausklinkelemente (14) jeweils entlang ihrer Drehachse (Y) in dem Futterkörper (2) translatorisch bewegbar geführt sind und mit dem Futterkörper (2) über Steuermittel derart gekoppelt sind, dass sie jeweils entlang ihrer Drehachse (Y) axial verstellt werden, wenn sie um die Drehachse (Y) verdreht werden, wobei die Ausklinkelemente (14) jeweils in ihrer ersten Drehlage eine radial äußere Position einnehmen, in der sie außer Eingriff von dem Spannkolben (13) stehen, und in ihrer zweiten Drehlage eine radial innere Position einnehmen, in der sie mit dem Spannkolben (13) in Eingriff kommen, um diesen in der Sicherungsposition zu arretieren,
wobei bevorzugt die Steuermittel für jedes Ausklinkelement (14) eine in der Außenfläche des Ausklinkelements (14) ausgebildete Steuernut (21) und einen am Futterkörper (2) angeordneten Steuerbolzen (22), welcher in die Steuernut (21) eingreift, aufweisen, wobei die Steuernut (21) einen wendelartigen Nutabschnitt (23) umfasst, welcher sich in der Weise entlang eines Umfangsabschnitts des Ausklinkelements (14) erstreckt, dass das Ausklinkelement (14) bei einer Drehung um die Drehachse (Y) translatorisch entlang seiner Drehachse (Y) bewegt wird, um in Eingriff mit dem Spannkolben (13) zu kommen oder diesen freizugeben, wobei sich insbesondere an das eine und/oder andere Ende des wendelartigen Nutabschnitts (23) ein sich in Umfangsrichtung erstreckender Nutabschnitt (24) anschließt.

3. Spannfutter (1) nach Anspruch 2, **dadurch gekennzeichnet, dass** jedes Ausklinkelement (14) einen Exzenternocken (17) aufweist, der an einer hinteren Stirnfläche der zugehörigen Treibbacke (11) anliegt und derart ausgestaltet ist, dass er diese in der ersten Drehlage des Ausklinkelements (14) in der Arbeitsstellung positioniert,
wobei insbesondere der Exzenternocken (17) an seiner Außenkontur eine insbesondere ebene Anlagefläche (17a) aufweist, welche derart ausgestaltet ist, dass sie in der ersten Drehlage des Ausklinkelementes (14) flächig an der hinteren Stirnfläche (11a) der zugehörigen Treibbacke (11) anliegt,
wobei bevorzugt der Exzenternocken (17) an seiner Außenkontur ferner eine insbesondere ebene Kontaktfläche (17b) aufweist, welche derart ausgestaltet ist, dass sie in der zweiten Drehlage des Ausklinkelements (14) flächig an der hinteren Stirnfläche (11a) der zugehörigen Treibbacke (11) anliegt.

4. Spannfutter (1) nach einem der Ansprüche 1 bis 3, **dadurch gekennzeichnet, dass** jedes Ausklinkelement (14) eine Eingriffsöffnung (18) für einen Ausklinkschlüssel aufweist,
wobei insbesondere jedes Ausklinkelement (14) einen Arretiermechanismus umfasst, der derart ausgestaltet ist, dass ein in die Eingriffsöffnung (18) eingebrachter Ausklinkschlüssel an dem Ausklinkelement (14) arretiert wird, wenn sich das Ausklinkelement (14) außerhalb seiner ersten Drehlage befindet, und ein Entnehmen des Ausklinkschlüssels nur in der der Arbeitsstellung der Treibbacke (11) entsprechenden ersten Drehlage möglich ist,
wobei bevorzugt der Arretiermechanismus ein insbesondere als Kugel oder als Druckbolzen ausgebildetes Eingriffselement (19) umfasst, welches im Ausklinkelement (14) radial zu seiner Drehachse (Y) im Bereich der Eingriffsöffnung (18) beweglich angeordnet ist und derart geführt ist, dass es radial zu seiner Drehachse (Y) nach außen vorragt und aus der Eingriffsöffnung (18) zurückgezogen ist, wenn sich das Ausklinkelement (14) in seiner ersten Drehlage befindet, und in die Eingriffsöffnung (18) eingreift und einen in diese eingesetzten Ausklinkschlüssel arretiert, wenn sich das Ausklinkelement (14) außerhalb seiner ersten Drehlage befindet,
wobei insbesondere jedes Ausklinkelement (14) in einer Aufnahmebohrung (15) des Futterkörpers (2) angeordnet ist, in deren radialer Wandung eine Vertiefung ausgebildet ist, in welche das Eingriffselement (19) ragt, wenn sich das Ausklinkelement (14) in seiner ersten Drehlage befindet,
wobei bevorzugt Abdichtmittel vorgesehen sind, um den jeweils zwischen den Ausklinkelementen (14) und der Aufnahmebohrung (15) des Futterkörpers (2) ausgebildeten Ringspalt abzudichten.

5. Spannfutter (1) nach einem der Ansprüche 2 bis 4, **dadurch gekennzeichnet, dass** jedem Ausklinkelement (14) ferner ein Rastmechanismus zu seiner Fixierung in seiner ersten Drehlage zugeordnet ist, um eine unbeabsichtigte Bewegung der Treibbacke (11) von ihrer Eingriffsposition in die Spannbackenwechselposition zu verhindern, wobei insbesondere der Rastmechanismus eine im Ausklinkelement (14) ausgebildete Aussparung aufweist, in welche ein korrespondierendes, im Futterkörper (2) angeordnetes Rastelement, das insbesondere eine federbetätigte Kugel oder ein federbetätigter Zylinderstift ist, eingreift, wenn sich das Ausklinkelement (14) in seiner ersten Drehlage befindet.

6. Spannfutter (1) nach einem der vorherigen Ansprüche, **dadurch gekennzeichnet, dass** dieses ferner einen Kontrollmechanismus umfasst, welcher derart ausgestaltet ist, dass eine Bewegung der Treibbacke (11) von der Backenwechselstellung in die Arbeitsstellung nur möglich ist, wenn eine Spannbacke (5) in der Führungsnut (4) des Futterkörpers (2) angeordnet ist.

7. Spannfutter (1) nach Anspruch 6, **dadurch gekennzeichnet, dass** der Kontrollmechanismus
einen in radialer Richtung im Grundkörper (7) der Treibbackeneinheiten (6) zwischen einer inneren Freigabeposition, in welcher die Treibbacke (11) axial beweglich ist, und einer äußeren Arretierposition, in welcher er in eine korrespondierende Ausnehmung (26) der Treibbacke (11) eingreift und diese in der Backenwechselstellung arretiert, bewegbaren Arretierstift (25) und
einen in einer vorderseitigen Öffnung des Grundkörpers (7) der Treibbackeneinheit (6) angeordneten Kontrollbolzen (28), der zwischen einer vorderen Endstellung, in welcher er in die Führungsnut (4) des Futterkörpers (2) ragt, und einer hinteren Endstellung, in welcher er sich vollständig außerhalb der Führungsnut (4) des Futterkörpers (2) befindet, bewegbar ist, umfasst,
wobei der Kontrollmechanismus derart ausgebildet ist, dass der Arretierstift (25) die Arretierposition einnimmt, wenn die Treibbacke (11) in der Backenwechselstellung ist und sich keine Spannbacke (5) in der Führungsnut (4) befindet, und von dieser gegen eine Druckkraft über eine Keilanordnung durch den Kontrollbolzen (28) in die innere Freigabeposition bewegt wird, wenn der Kontrollbolzen (28) durch Einsetzen einer Spannbacke (5) in die Führungsnut (4) nach hinten gedrückt wird.

8. Spannfutter (1) nach Anspruch 7, **dadurch gekennzeichnet, dass** der Kontrollbolzen (28) eine sich über einen Teilabschnitt in seiner Längsrichtung erstreckende Nut (29) aufweist, in die ein im Grundkörper (7) der Treibbackeneinheit (6) angeordnetes Gegenelement (30) eingreift, um durch Anlage an einem Nutende seine vordere Endstellung zu definieren, und/oder dass der Kontrollbolzen vorderseitig eine ebene Stirnfläche aufweist, die sich in radialer Richtung mindestens über eine Länge, welche der Teilung der Verzahnung (12) der Treibbacken (11) entspricht, erstreckt, und/oder dass die auf den Arretierstift (25) nach außen wirkende Druckkraft durch eine sich gegen den Grundkörper (7) der Treibbackeneinheit (6) stützende Schraubendruckfeder (31) aufgebracht wird, und/oder dass der Koppelmechanismus als Keilhakenmechanismus oder als Winkelhebelmechanismus ausgebildet ist.

9. Spannfutter (1) nach einem der vorherigen Ansprüche, **dadurch gekennzeichnet, dass** im Futterkörper (2) Durchgangsöffnungen (9) vorgesehen sind, welche die Führungsnuten (4) und die darunter angeordneten Führungstaschen (8) jeweils verbinden, wobei insbesondere jeder Grundkörper (7) der Treibbackeneinheiten (6) einen die jeweilige Durchgangsöffnung (9) durchsetzenden und in die Führungsnut (4) ragenden Vorsprung (10) aufweist, wobei insbesondere in jeder Führungsnut (4) ein radial mit den Treibbackeneinheiten (6) bewegbares flächiges Abdichtelement (32) vorgesehen ist, welches am Nutgrund anliegt und eine zentrale Aussparung (33) aufweist, in die der Vorsprung (10) des Grundkörpers (7) axial eingreift, und welches bevorzugt den Vorsprung (10) des Grundkörpers (7) ringförmig, insbesondere formschlüssig umgreift und/oder an dem Vorsprung (10) mit Spiel anliegt, wobei das Abdichtelement (32) insbesondere so ausgestaltet ist, dass es sich in jeder radialen Position des Grundkörpers (7) radial und in Breitenrichtung der Führungsnut (4) über die gesamte Durchgangsöffnung (9) erstreckt.

10. Spannfutter (1) nach Anspruch 9, **dadurch gekennzeichnet, dass** die Führungsnuten (4) einen T-förmigen Querschnitt mit einem vorderen Führungsnutabschnitt (34), an dem Führungsmittel für eine Spannbacke vorgesehen sind, und einen gegenüber diesem verbreiteten hinteren Endabschnitt (35), in welchem die Abdichtelemente (32) angeordnet sind, aufweisen, wobei insbesondere im Übergang vom hinteren Endabschnitt (35) zum vorderen Führungsnutabschnitt (34) Führungsschultern zum Halten des Abdichtelements (32) in axialer Richtung ausgebildet sind, die insbesondere parallel zum Nutgrund der Führungsnut (4) orientiert sind, und/oder wobei insbesondere sich das Abdichtelement (32) im Wesentlichen über die gesamte Breite des hinteren Endabschnitts der Führungsnut (4) erstreckt.

11. Spannfutter (1) nach Anspruch 9 oder 10, **dadurch gekennzeichnet, dass** das Abdichtelement (32) in seiner zur nutgrundweisenden Seite eine die Aussparung (33) umgebende umlaufende Nut (36) zur Aufnahme eines Dichtelements (37) aufweist.

12. Spannfutter (1) nach einem der vorherigen Ansprüche, **dadurch gekennzeichnet, dass** der zwischen der Treibbacke (11) und dem Grundkörper (7) der Treibbackeneinheit (6) und/oder der zwischen dem Kontrollbolzen (28) und der korrespondierenden Bohrung (27) des Grundkörpers (7) ausgebildete Spalt mittels Dichtungselementen abgedichtet ist, um ein Eindringen von Schmutz und Flüssigkeiten in den Grundkörper (7) zu vermeiden, wobei insbesondere die Treibbacke (11) und/oder der Kontrollbolzen (28) ringförmig umlaufende Nuten (38, 39) aufweisen, in welchen O-Ringe (40, 41) oder Quadringe angeordnet sind.

13. Spannfutter (1) nach einem der vorherigen Ansprüche 9 bis 12, **dadurch gekennzeichnet, dass** der zwischen dem Grundkörper (7) der Treibbackeneinheit (6) und der vorderen Wandung der Führungstasche (8) ausgebildete Spalt durch ein Dichtelement gegen das Eindringen von Schmutz und Flüssigkeiten abgedichtet ist.

14. Spannfutter (1) nach Anspruch 13, **dadurch gekennzeichnet, dass** in der Führungstasche (8) des Futterkörpers (2) innenseitig umlaufend um die Durchgangsöffnung eine ringförmig umlaufende Nut (42) ausgebildet ist, in welcher ein Dichtelement, insbesondere ein O-Ring (43) oder ein Quadring angeordnet ist.

## Claims

1. Chuck (1) for machine tools, in particular for lathes, having
a chuck body (2) defining a chuck axis (X) and having in its front end face (3) several guide grooves (4) extending radially to the chuck axis (X) for receiving clamping jaws (5),
each guide groove (4) having assigned thereto a driving jaw unit (6) which has a base body (7) which can be moved parallel to the guide groove (4) between an inner and an outer end position in a guide pocket (8) formed in the chuck body (2) behind the guide groove (4) and comprises a driving jaw (11) held on the base body (7) and movable relative thereto in the axial direction, which can be brought into engagement with a corresponding counter-toothing of a clamping jaw (5) via a front toothing (12),
a chuck piston (13) axially movable in the chuck body (2), movable between a front end position and a rear end position in the chuck body (2) and coupled via a coupling mechanism to the base bodies (7) of the driving jaw units (11) to convert an axial movement of the chuck piston (13) into radial movements of the driving jaw units (6),
wherein (6) at least one notching mechanism is provided with a disengaging element (14) which is movably arranged in the chuck body (2) relative thereto and is coupled to at least one driving jaw (11) in order, by moving the disengaging element (14), to move the driving jaw (11) between a rear jaw change position in which the toothing (12) of the driving jaw is lowered out of the guide groove (4) to such an extent that a jaw change is possible, and a front working position in which a jaw change is not possible,
wherein
a safety mechanism is provided and designed in such a way that a movement of the disengaging element (14) from a first position corresponding to the working position of the driving jaw (11) into a second position corresponding to the jaw change position of the driving jaw (11) is only possible when the chuck piston (13) is in a defined axial securing position, and the chuck piston (13) is locked in the securing position when the disengaging element (14) is in its second position, in particular the securing position of the chuck piston (13) corresponding to its front end position, wherein
each driving jaw unit (6) has assigned thereto precisely one disengaging mechanism with a disengaging element (14),
wherein each disengaging element (14) is mounted so as to be rotatable about a respective axis of rotation (Y) lying transversely, in particular radially to the chuck axis (X), and is coupled to the associated driving jaw (11) in such a way that a first rotational position of the disengaging element (14) corresponds to the working position of the associated driving jaw (11) and a second rotational position of the disengaging element (14) corresponds to the jaw change position of the associated driving jaw (11), **characterized in that** each disengaging element (14) is mounted rotatably in the chuck body.

2. Chuck (1) according to claim 1, **characterized in that** the disengaging elements (14) are each translationally movably guided along their axis of rotation (Y) in the chuck body (2) and are coupled to the chuck body (2) via control means in such a way that they are each axially adjusted along their axis of rotation (Y) when they are rotated about the axis of rotation (Y), wherein the disengaging elements (14) each assume, in their first rotational position, a radially outer position in which they are disengaged from the chuck piston (13), and assume, in their second rotational position, a radially inner position in which they engage with the chuck piston (13) in order to lock the latter in the securing position,
wherein, preferably, the control means for each disengaging element (14) comprise a control groove (21) formed in the outer surface of the disengaging element (14) and a control pin (22) arranged on the chuck body (2) and engaging in the control groove (21), wherein the control groove (21) comprises a helical groove portion (23) extending along a circumferential portion of the disengaging element (14) in such a way that the disengaging element (14) is locked in the locking position by the control pin (22), **in that** the disengaging element (14) is moved translationally along its axis of rotation (Y) during a rotation about the axis of rotation (Y) in order to come into engagement with the clamping piston (13) or to release the latter, wherein, in particular, a groove section (24) extending in the circumferential direction adjoins one and/or the other end of the helical groove section (23).

3. Chuck (1) according to claim 2, **characterized in that** each disengaging element (14) has an eccentric cam (17) which bears against a rear end face of the associated driving jaw (11) and is designed in such a way that it positions the latter in the first rotational position of the disengaging element (14) in the working position,
wherein, in particular, the eccentric cam (17) has on its outer contour a contact surface (17a), in particular a flat contact surface (17a), which is designed in such a way that in the first rotational position of the disengaging element (14) it lies flat against the rear end face (11a) of the associated driving jaw (11),
the eccentric cam (17) preferably having on its outer contour a contact surface (17b), in particular a flat contact surface, which is designed in such a way that in the second rotational position of the disengaging element (14) it bears flat against the rear end face (11a) of the associated driving jaw (11).

4. Chuck (1) according to one of claims 1 to 3, **characterized in that** each disengaging element (14) has an engagement opening (18) for a disengaging key,
wherein in particular each disengaging element (14) comprises a locking mechanism which is designed in such a way that a disengaging key introduced into the engagement opening (18) is locked to the disengaging element (14) when the disengaging element (14) is located outside its first rotational position, and removal of the disengaging key is only possible in the first rotational position corresponding to the working position of the driving jaw (11),
wherein the locking mechanism preferably comprises an engagement element (19) which is designed in particular as a ball or as a pressure pin and which is arranged in the disengagement element (14) so as to be movable radially with respect to its axis of rotation (Y) in the region of the engagement opening (18) and is guided in such a manner that it projects radially outwardly with respect to its axis of rotation (Y) and is retracted from the engagement opening (18) when the disengaging element (14) is in its first rotational position, and engages in the engagement opening (18) and locks a disengaging key inserted therein when the disengaging element (14) is outside its first rotational position,
wherein in particular each disengaging element (14) is arranged in a receiving bore (15) of the chuck body (2), in the radial wall of which a recess is formed into which the engagement element (19) projects when the disengaging element (14) is in its first rotational position,
wherein sealing means are preferably provided to seal the annular gap formed in each case between the disengaging elements (14) and the receiving bore (15) of the chuck body (2).

5. Chuck (1) according to one of the claims 2 to 4, **characterized in that** each disengaging element (14) has further assigned thereto a latching mechanism for fixing it in its first rotational position in order to prevent an unintentional movement of the driving jaw (11) from its engagement position into the jaw changing position, wherein in particular the latching mechanism has a recess formed in the disengaging element (14), into which a corresponding latching element arranged in the chuck body (2), which is in particular a spring-actuated ball or a spring-actuated cylindrical pin, engages when the disengaging element (14) is in its first rotational position.

6. Chuck (1) according to one of the previous claims, **characterized in that** it further comprises a control mechanism which is designed in such a way that a movement of the driving jaw (11) from the jaw changing position to the working position is only possible when a clamping jaw (5) is arranged in the guide groove (4) of the chuck body (2).

7. Chuck (1) according to claim 6, **characterized in that** the control mechanism
comprises a locking pin (25) movable in radial direction in the base body (7) of the driving jaw units (6) between an inner release position, in which the driving jaw (11) is axially movable, and an outer locking position, in which it engages in a corresponding recess (26) of the driving jaw (11) and locks it in the jaw change position, and
a control bolt (28) arranged in a front opening of the base body (7) of the driving jaw unit (6), which control bolt (28) is movable between a front end position, in which it projects into the guide groove (4) of the chuck body (2), and a rear end position, in which it is located completely outside the guide groove (4) of the chuck body (2),
wherein the control mechanism is designed in such a way that the locking pin (25) assumes the locking position when the driving jaw (11) is in the jaw changing position and there is no clamping jaw (5) in the guide groove (4), and is moved from this position against a pressure force via a wedge arrangement by the control bolt (28) into the inner release position when the control pin (28) is pressed backwards by inserting a clamping jaw (5) into the guide groove (4).

8. Chuck (1) according to claim 7, **characterized in that** the control bolt (28) has a groove (29) which extends over a partial section in its longitudinal direction and into which a counter-element (30) arranged in the base body (7) of the driving jaw unit (6) engages in order to define its front end position by bearing against one groove end, and/or **in that** the control bolt has a flat end face at the front, which extends in the radial direction at least over a length corresponding to the pitch of the toothing (12) of the driving jaws (11), and/or in that the outwardly acting pressure force on the locking pin (25) is applied by a helical compression spring (31) supported against the base body (7) of the driving jaw unit (6), and/or **in that** the coupling mechanism is designed as a wedge hook mechanism or as an angle lever mechanism.

9. Chuck (1) according to one of the previous claims, **characterized in that** through openings (9) are provided in the chuck body (2) which connect the guide grooves (4) and the guide pockets (8) arranged thereunder, respectively, in particular each base body (7) of the driving jaw units (6) having a projection (10) which passes through the respective through-opening (9) and projects into the guide groove (4), in particular each guide groove (4) being provided with a flat sealing element (32) which can be moved radially with the driving jaw units (6), which bears against the groove base and has a central recess (33), in which the projection (10) of the base body (7) engages axially, and which preferably engages annularly, in particular positively, around the projection (10) of the base body (7) and/or bears with play against the projection (10), the sealing element (32) being designed in particular in such a way that it extends radially and in the width direction of the guide groove (4) over the entire through opening (9) in any radial position of the base body (7).

10. Chuck (1) according to claim 9, **characterized in that** the guide grooves (4) have a T-shaped cross-section with a front guide groove section (34), on which guide means for a clamping jaw are provided, and a rear end section (35) widened with respect thereto, in which the sealing elements (32) are arranged, wherein in particular in the transition from the rear end portion (35) to the front guide groove portion (34) guide shoulders are formed for holding the sealing element (32) in axial direction, which are oriented in particular parallel to the groove bottom of the guide groove (4), and/or wherein in particular the sealing element (32) extends substantially over the entire width of the rear end portion of the guide groove (4).

11. Chuck (1) according to claim 9 or 10, **characterized in that** the sealing element (32) has in its side facing the groove bottom a circumferential groove (36) surrounding the recess (33) for receiving a sealing element (37).

12. Chuck (1) according to one of the previous claims, **characterized in that** the gap formed between the driving jaw (11) and the base body (7) of the driving jaw unit (6) and/or the gap formed between the control bolt (28) and the corresponding bore (27) of the base body (7) is sealed by means of sealing elements, in order to prevent penetration of dirt and liquids into the base body (7), wherein in particular the driving jaw (11) and/or the control bolt (28) have annular grooves (38, 39) in which O-rings (40, 41) or square rings are arranged.

13. Chuck (1) according to one of the previous claims 9 to 12, **characterized in that** the gap formed between the base body (7) of the driving jaw unit (6) and the front wall of the guide pocket (8) is sealed by a sealing element against the penetration of dirt and liquids.

14. Chuck (1) according to claim 13, **characterized in that** an annular groove (42) is formed in the guide pocket (8) of the chuck body (2), running around the passage opening on the inside, in which groove a sealing element, in particular an O-ring (43) or a quad ring, is arranged.

## Revendications

1. Mandrin (1) pour machines-outils, en particulier pour tours, avec
un corps de mandrin (2) définissant un axe de mandrin (X), qui présente dans sa face frontale avant (3) plusieurs rainures de guidage (4) s'étendant radialement par rapport à l'axe de mandrin (X) et destinées à recevoir des mors de serrage (5),
chaque rainure de guidage (4) ayant associée à ce lui une unité de mâchoires d'entraînement (6) qui présente un corps de base (7) qui peut être déplacé dans une poche de guidage (8) formée derrière la rainure de guidage (4) dans le corps de mandrin (2), parallèlement à la rainure de guidage (4), entre une position finale intérieure et une position finale extérieure, et comprend une mâchoire d'entraînement (11) maintenue sur le corps de base (7) et mobile en direction axiale par rapport à celui-ci, pouvant être amenée en prise avec une contre-denture correspondante d'une mâchoire de serrage (5) par l'intermédiaire d'une denture (12) côté avant,
un piston de mandrin (13) mobile axialement dans le corps de mandrin (2), qui peut être déplacé entre une position d'extrémité avant et une position d'extrémité arrière dans le corps de mandrin (2) et qui est couplé aux corps de base (7) des unités de mâchoires d'entraînement (11) par un mécanisme de couplage, afin de convertir un mouvement axial du piston de mandrin (13) en mouvements radiaux des unités de mâchoires d'entraînement (6),
dans lequel (6) il est prévu au moins un mécanisme d'encliquetage avec un élément d'encliquetage (14) qui est disposé dans le corps de mandrin (2) de manière mobile par rapport à celui-ci et qui est couplé à au moins une mâchoire d'entraînement (11) pour déplacer la mâchoire d'entraînement (11), par déplacement de l'élément de déclenchement (14), entre une position arrière de changement de mâchoire, dans laquelle la denture (12) de la mâchoire d'entraînement est abaissée hors de la rainure de guidage (4) jusqu'à ce qu'un changement de mâchoire soit possible, et une position de travail avant dans laquelle un changement de mâchoire n'est pas possible,
où
un mécanisme de sécurité est prévu et conçu de telle sorte qu'un mouvement de l'élément de déclenchement (14) d'une première position correspondant à la position de travail de la mâchoire d'entraînement (11) dans une deuxième position correspondant à la position de changement de mâchoire de la mâchoire d'entraînement (11) n'est possible, lorsque le piston de mandrin (13) se trouve dans une position de sécurité axiale définie, et le piston de mandrin (13) est bloqué dans la position de sécurité lorsque l'élément de déclenchement (14) se trouve dans sa deuxième position, la position de sécurité du piston de mandrin (13) correspondant en particulier à sa position finale avant, dans lequel
à chaque unité de mâchoires d'entraînement (6) à associé à cela exactement un mécanisme de décliquetage avec un élément de déclenchement (14),
**òu** chaque élément de déclenchement (14) est logé dans le corps de mandrin (2) de manière à pouvoir tourner autour d'un axe de rotation (Y) situé transversalement à l'axe de mandrin (X), en particulier radialement, et est couplé à la mâchoire d'entraînement (11) correspondante de telle sorte qu'-une première position de rotation de l'élément de déclenchement (14) correspond à la position de travail de la mâchoire d'entraînement (11) correspondante et une deuxième position de rotation de l'élément de déclenchement (14) correspond à la position de changement de mâchoire de la mâchoire d'entraînement (11) correspondante.

2. Mandrin (1) selon la revendication 1, **caractérisé en ce que** les éléments de déclenchement (14) sont guidés de manière mobile en translation le long de leur axe de rotation (Y) dans le corps de mandrin (2) et sont couplés au corps de mandrin (2) par des moyens de commande de telle sorte qu'ils sont déplacés axialement le long de leur axe de rotation (Y) lorsqu'ils sont tournés autour de l'axe de rotation (Y), les éléments de déclenchement (14) occupant chacun, dans leur première position de rotation, une position radialement extérieure dans laquelle ils sont dégagés du piston de serrage (13) et, dans leur deuxième position de rotation, une position radialement intérieure dans laquelle ils viennent en prise avec le piston de serrage (13) pour le bloquer dans la position de blocage,
ou, de préférence, les moyens de commande pour chaque élément de déclenchement (14) comprennent une rainure de commande (21) formée dans la surface extérieure de l'élément de déclenchement (14) et un boulon de commande (22) disposé sur le corps de mandrin (2) qui s'engage dans la rainure de commande (21), la rainure de commande (21) comprenant une section de rainure hélicoïdale (23) qui s'étend de telle manière le long d'une section périphérique de l'élément de déclenchement (14), que l'élément de déclenchement (14), lors d'une rotation autour de l'axe de rotation (Y), est déplacé en translation le long de son axe de rotation (Y) pour venir en prise avec le piston de serrage (13) ou pour libérer celui-ci, une section de rainure (24) s'étendant dans la direction circonférentielle se raccordant en particulier à l'une et/ou à l'autre extrémité de la section de rainure (23) de type hélicoïdal.

3. Mandrin (1) selon la revendication 2, **caractérisé en ce que** chaque élément de déclenchement (14) présente une came excentrique (17) qui s'-applique contre une face frontale arrière de la mâchoire d'entraînement (11) correspondante et qui est conçue de telle sorte qu'elle positionne celle-ci dans la position de travail dans la première position de rotation de l'élément de déclenchement (14),
ou, la came excentrique (17) en particulier présente sur son contour extérieur une surface d'appui (17a) en particulier plane, qui est conçue de telle sorte que, dans la première position de rotation de l'élément de déclenchement (14), elle s'appuie à plat sur la surface frontale arrière (11a) de la mâchoire d'entraînement (11) correspondante,
ou, de préférence, la came excentrique (17) présente sur son contour extérieur une surface de contact (17b) en particulier plane, qui est conçue de telle sorte que, dans la deuxième position de rotation de l'élément de déclenchement (14), elle s'applique à plat contre la surface frontale arrière (11a) de la mâchoire d'entraînement (11) correspondante.

4. Mandrin (1) selon l'une des revendications 1 à 3, **caractérisé en ce que** chaque élément d'encliquetage (14) présente une ouverture d'engagement (18) pour une clé de déclenchement,
chaque élément de déclenchement (14) comprend en particulier un mécanisme d'arrêt qui est conçu de telle sorte qu'une clé d'encliquetage introduite dans l'ouverture d'engagement (18) est arrêtée sur l'élément de déclenchement (14) lorsque l'élément de déclenchement (14) se trouve en dehors de sa première position de rotation, et qu'un retrait de la clé d'encliquetage n'est possible que dans la première position de rotation correspondant à la position de travail de la mâchoire d'entraînement (11),
de préférence, le mécanisme d'arrêt comprend un élément d'engagement (19), en particulier sous forme de bille ou de boulon de pression, qui est disposé dans l'élément de déclenchement (14) de manière mobile radialement par rapport à son axe de rotation (Y) dans la zone de l'ouverture d'engagement (18) et est guidé de telle sorte, qu'il dépasse radialement vers l'extérieur par rapport à son axe de rotation (Y) et qu'il est retiré de l'ouverture d'engagement (18) lorsque l'élément de déclenchement (14) se trouve dans sa première position de rotation, et qu'il s'engage dans l'ouverture d'engagement (18) et bloque une clé de déclenchement insérée dans celle-ci lorsque l'élément de déclenchement (14) se trouve en dehors de sa première position de rotation,
chaque élément de déclenchement (14) étant notamment disposé dans un alésage de réception (15) du corps de mandrin (2), dans la paroi radiale duquel est formé un renfoncement dans lequel l'élément d'engagement (19) fait saillie lorsque l'élément de déclenchement (14) se trouve dans sa première position de rotation,
des moyens d'étanchéité étant de préférence prévus pour rendre étanche l'interstice annulaire formé entre les éléments de déclenchement (14) et l'-alésage de réception (15) du corps de mandrin (2).

5. Mandrin (1) selon l'une des revendications 2 à 4, **caractérisé en ce qu'à** chaque élément de déclenchement (14) à en outre associé à celui un mécanisme de déclenchement pour sa fixation dans sa première position de rotation, afin d'empêcher un mouvement involontaire de la mâchoire d'entraînement (11) de sa position d'engagement à la position de changement de mâchoire, le mécanisme de déclenchement présentant en particulier un évidement formé dans l'élément de déclenchement (14), dans lequel s'engage un élément de déclenchement correspondant disposé dans le corps de mandrin (2), qui est en particulier une bille actionnée par ressort ou une goupille cylindrique actionnée par ressort, lorsque l'élément de déclenchement (14) se trouve dans sa première position de rotation.

6. Mandrin (1) selon l'une des revendications précédentes, **caractérisé en ce qu'il** comprend en outre un mécanisme de contrôle qui est conçu de telle sorte qu'un mouvement de la mâchoire d'entraînement (11) de la position de changement de mâchoire à la position de travail n'est possible que lorsqu'une mâchoire de serrage (5) est disposée dans la rainure de guidage (4) du corps de mandrin (2).

7. Mandrin de serrage (1) selon la revendication 6, **caractérisé en ce que** le mécanisme de contrôle
une goupille d'arrêt (25) mobile en direction radiale dans le corps de base (7) des mâchoires d'entraînement (6) entre une position de libération intérieure, dans laquelle la mâchoire d'entraînement (11) est mobile axialement, et une position de blocage extérieure, dans laquelle elle s'engage dans un évidement correspondant (26) de la mâchoire d'entraînement (11) et bloque celle-ci dans la position de changement de mâchoire, et
un boulon de contrôle (28) disposé dans une ouverture avant du corps de base (7) de l'unité de mâchoires de commande (6), qui est mobile entre une position finale avant, dans laquelle il fait saillie dans la rainure de guidage (4) du corps de mandrin (2), et une position finale arrière, dans laquelle il se trouve entièrement à l'extérieur de la rainure de guidage (4) du corps de mandrin (2),
ou le mécanisme de contrôle est conçu de telle sorte que la goupille de blocage (25) prend la position de blocage lorsque la mâchoire d'entraînement (11) est dans la position de changement de mâchoire et qu'aucune mâchoire de serrage (5) ne se trouve dans la rainure de guidage (4), et est déplacée de celle-ci vers la position de libération intérieure à l'encontre d'une force de pression par l'intermédiaire d'un agencement de clavette par la goupille de contrôle (28) lorsque la goupille de contrôle (28) est poussée vers l'arrière par l'insertion d'une mâchoire de serrage (5) dans la rainure de guidage (4).

8. Mandrin de serrage (1) selon la revendication 7, **caractérisé en ce que** le boulon de contrôle (28) présente une rainure (29) s'étendant sur une section partielle dans sa direction longitudinale, dans laquelle s'engage un contre-élément (30) disposé dans le corps de base (7) de l'unité de mâchoires d'entraînement (6), afin de définir sa position finale avant en s'appuyant sur une extrémité de la rainure, et/ou **en ce que** le boulon de contrôle présente une surface frontale plane du côté avant, qui s'étend dans la direction radiale au moins sur une longueur correspondant au pas de la denture (12) des mâchoires de commande (11), et/ou **en ce que** la force de pression agissant vers l'extérieur sur la goupille d'arrêt (25) est exercée par un ressort de pression hélicoïdal (31) s'appuyant contre le corps de base (7) de l'unité de mâchoires de commande (6), et/ou **en ce que** le mécanisme d'accouplement est conçu comme un mécanisme à crochet à clavette ou comme un mécanisme à levier coudé.

9. Mandrin de serrage (1) selon l'une des revendications précédentes, **caractérisé en ce que** des ouvertures de passage (9) sont prévues dans le corps de mandrin (2), lesquelles relient les rainures de guidage (4) et les poches de guidage (8) disposées en dessous, chaque corps de base (7) des unités de mâchoires d'entraînement (6) présentant en particulier une saillie (10) traversant l'ouverture de passage (9) respective et pénétrant dans la rainure de guidage (4), un élément d'étanchéité (32) plat, mobile radialement avec les unités de mâchoires d'entraînement (6), étant en particulier prévu dans chaque rainure de guidage (4), qui s'applique au fond de la rainure et présente un évidement central (33) dans lequel la saillie (10) du corps de base (7) s'engage axialement, et qui entoure de préférence la saillie (10) du corps de base (7) de manière annulaire, en particulier par complémentarité de forme et/ou s'applique avec du jeu sur la saillie (10), l'élément d'-étanchéité (32) étant notamment conçu de telle sorte que, dans chaque position radiale du corps de base (7), il s'étend radialement et dans le sens de la largeur de la rainure de guidage (4) sur toute l'ouverture de passage (9).

10. Mandrin (1) selon la revendication 9, **caractérisé en ce que** les rainures de guidage (4) présentent une section transversale en forme de T avec une section de rainure de guidage avant (34), sur laquelle sont prévus des moyens de guidage pour un mors de serrage, et une section d'extrémité arrière (35) élargie par rapport à celle-ci, dans laquelle sont disposés les éléments d'étanchéité (32), ou, en particulier, des épaulements de guidage destinés à maintenir l'élément d'étanchéité (32) dans la direction axiale sont réalisés dans la transition entre la section d'extrémité arrière (35) et la section de rainure de guidage avant (34), lesquels épaulements sont orientés en particulier parallèlement au fond de la rainure de guidage (4), et/ou, en particulier, l'élément d'étanchéité (32) s'étendant, essentiellement sur toute la largeur de la section d'extrémité arrière de la rainure de guidage (4).

11. Mandrin (1) selon la revendication 9 ou 10, **caractérisé en ce que** l'-élément d'étanchéité (32) présente, dans sa face orientée vers le fond de la rainure, une rainure périphérique (36) entourant l'évidement (33) et destinée à recevoir un élément d'étanchéité (37).

12. Mandrin (1) selon l'une des revendications précédentes, **caractérisé en ce que** la fente formée entre la mâchoire d'entraînement (11) et le corps de base (7) de l'unité de mâchoires d'entraînement (6) et/ou la fente formée entre le boulon de contrôle (28) et l'alésage correspondant (27) du corps de base (7) est rendue étanche au moyen d'éléments d'étanchéité, pour éviter la pénétration de saletés et de liquides dans le corps de base (7), la mâchoire d'entraînement (11) et/ou le boulon de contrôle (28) présentant en particulier des rainures annulaires (38, 39) dans lesquelles sont disposés des joints toriques (40, 41) ou des bagues carrées.

13. Mandrin (1) selon l'une des revendications précédentes 9 à 12, **caractérisé en ce que** la fente formée entre le corps de base (7) de l'unité de mâchoires de commande (6) et la paroi avant de la poche de guidage (8) est rendue étanche par un élément d'étanchéité contre la pénétration de saletés et de liquides.

14. Mandrin (1) selon la revendication 13, **caractérisé en ce que,** dans la poche de guidage (8) du corps de mandrin (2), une rainure annulaire (42) est formée sur le côté intérieur autour de l'ouverture de passage, dans laquelle est disposé un élément d'étanchéité, en particulier un joint torique (43) ou un anneau carré.
